Europäisches Patentamt

European Patent Office

Office européen des brevets

(19)

(11) Publication number: **0 477 813 A1**

# EUROPEAN PATENT APPLICATION

(12)

(21) Application number: **91116123.0**

(22) Date of filing: **23.09.91**

(51) Int. Cl.5: **B01D 8/00**, B01D 53/00

(30) Priority: **25.09.90 IT 2156390**

(43) Date of publication of application:
**01.04.92 Bulletin 92/14**

(84) Designated Contracting States:
**AT BE CH DE DK ES FR GB GR IT LI LU NL SE**

(71) Applicant: **Masetto, Gianclaudio**
**Via M. D'Azeglio, 2**
**I-20052 Monza (Milano)(IT)**
Applicant: **Scala, Luigi**
**Via V.Alfieri, 15**
**I-20057 Vedano al Lambro (Milano)(IT)**

(72) Inventor: **Masetto, Gianclaudio**
**Via M. D'Azeglio, 2**
**I-20052 Monza (Milano)(IT)**
Inventor: **Scala, Luigi**
**Via V.Alfieri, 15**
**I-20057 Vedano al Lambro (Milano)(IT)**

(74) Representative: **Perani, Aurelio et al**
**c/o JACOBACCI-CASETTA & PERANI Via**
**Visconti di Modrone 7**
**I-20122 Milano(IT)**

(54) **Method of removing pollutants in the form of gases, vapours or aerosols from a gaseous effluent.**

(57) In a method of removing organic and inorganic pollutants in the form of gases, vapours or aerosols from a gaseous effluent (F), the effluent (F) passes through a series of heat exchangers (4a, 5a, 4b, 5b) in which it is cooled so that the pollutants are separated by solidification.

FIG.1

The present invention relates to a method of removing pollutants in the form of gases, vapours or aerosols from a gaseous effluent.

In the description below and in the claims which follow, the term "pollutants" is intended to indicate any chemical compound used industrially which is considered harmful because of its impact on the environment and/or on living organisms. These substances include, for example, aromatic and aliphatic hydrocarbons, alcohols, aldehydes, ketones, organic oxides, amines, esters, ethers, glycols, glycol-ethers, alkyl halides, and aromatic halides.

The term gaseous effluent, on the other hand, is intended to indicate any gaseous flow output from a production process for discharge to the atmosphere.

As is known, many chemical compounds have toxic and hazardous characteristics such that the current antipollution standards set maximum limits for their concentrations in gaseous effluents.

These limits, which may vary from one case to another, are often of the order of 1-50 ppm and are not easy to achieve with large volumes of effluent.

In the industrial field in general, and in the chemicals and pure chemicals fields in particular, there is an ever greater need for the availability of technology which enables the concentrations of pollutants to be brought below the maximum limits allowed by the law in a reliable manner and at a minimal operating cost.

A first technique used in the sector for this purpose removes the pollutants after they have been condensed on the cold surfaces of a heat exchanger or by cooling them by direct contact with a suitable cold fluid, generally water.

Although this technique can be carried out with quite simple equipment, it has the considerable disadvantage that the gaseous effluent discharged from the condensation equipment inevitably still contains residual pollutants in quantities which vary in dependence both on the vapour pressures of the pollutants at their condensation temperatures and on the mechanical entrainment effect of the gas-flow.

In many cases the residual quantities exceed the maximum limits allowed by the standards.

A second technique used in the sector for removing volatile pollutants from a gaseous effluent is based on the absorption of solvents by a suitable scrubbing liquid.

In this case also, the gaseous effluent discharged from the absorption equipment (the scrubbers) inevitably contains residual pollutants in quantities which depend on their partition coefficients in the scrubbing liquid and upon the entrainment effect of the gas-flow; the problems described above are therefore present - to a greater or lesser extent.

A third technique established in the sector for removing pollutants from gaseous effluents is based on their selective adsorption by activated carbon.

This method is suitable in many cases for reducing the concentrations of the pollutants to within the limits allowed but at the same time is onerous from the organisational and economic points of view.

In fact, after a certain time, the activated carbon is exhausted, that is, it loses its adsorption capacity and has to be regenerated, for example, by steam, by heating under vacuum, or by a stream of hot nitrogen.

The loss of the adsorption capacity of the activated carbon not only necessitates the provision of two sets of adsorption equipment in parallel, but also the presence of a series of devices for regenerating the exhausted carbon.

Finally, as regards the aforementioned condensation, absorption and adsorption methods, it should be noted that, as well as a flow of purified gases, they also produce a liquid mixture of the scrubbing liquid and the pollutant, or of the condensation water and the pollutant, which in turn has to be treated in a suitable manner in order to separate or degrade the undesired chemical compound or compounds therein, and this considerably increases the overall cost of the purification of the effluent.

The technical problem upon which the present invention is based, therefore, is that of providing a method of removing pollutants in the form of gases, vapours or aerosols from a gaseous effluent, which enables the substances to be removed substantially completely and which at the same time does not have the disadvantages complained of with reference to the prior art mentioned.

According to the invention, this problem is solved by a method of the type indicated above, characterised in that the effluent including the pollutants is cooled to a temperature no higher than the freezing points of the pollutants so as to separate them from the effluent by solidifcation.

In fact, it has been found that if the gaseous effluent is cooled to a low enough temperature, the pollutants present therein in the form of gases, vapours or aerosols are removed substantially completely after solidification.

The temperature to which the effluent is cooled can easily by selected by an expert in the art in dependence on the chemical and physical properties of the undesired chemical compounds present in the effluent.

In general, it is at least equal to the freezing point of the compound with the lowest boiling point of the compounds to be removed. Temperatures between -50 and -150°C may be used to remove most pollutants commonly used at industrial levels. In particular, all the organic solvents used industrially can be removed within this temperature range.

The gaseous effluent may be cooled in a manner known in the art, for example, by heat exchangers with surfaces of the type with smooth or finned tubes and with the use of suitable refrigerant fluids. Of these, liquid nitrogen, freon, brine, ammonia, cooling water, etc. may be used.

If a heat exchanger with a tube nest is used, the refrigerant fluid preferably flows through the tube side and the gaseous effluent through the shell side, so that the pollutants can solidify on the outer surfaces of the tubes.

The use of liquid nitrogen is particularly advantageous whenever gaseous nitrogen is required, for example, as an inert fluid in the production process upstream of an installation for removing pollutants.

The method of the present invention thus enables the recovery of frigories from the nitrogen, which is stored in liquid form at about -196°C, and at the same time removes the pollutants from the gaseous effluent by solidification.

Moreover, it has been found that the solidification takes place in a differentiated manner at different points in the exchanger in dependence on the solidification temperatures of the pollutants. The higher its solidification temperature, the sooner the pollutant is deposited on the cold surface of the exchanger, for example, on the outsides of the tubes through which the refrigerant fluid flows.

As will become clearer from the following description, this enables the rough separation by fractional solidification of the various pollutants present in the gaseous effluent to be purified.

If a continuous flow of a polluted gaseous effluent is to be treated, the method of the present invention may be carried out by two heat exchangers (solidifiers) in parallel, one of which is at the removal stage whilst the other is at the regeneraton stage.

In fact, during the removal stage, the solidification of the pollutants progressively obstructs the exchanger so that the exchange of heat between the refrigerant fluid and the gaseous effluent becomes progressively worse up to the point at which the pollutants with the lowest solidification temperatures are no longer removed. When this limit condition is reached, the exchanger which is at the regeneration stage is switched with the one which is at the removal stage. This switching can be achieved in known manner, for example, by means of a three-way valve which is subservient to a meter for measuring the loss of pressure between the input and the output of the heat exchanger which is at the removal stage, or by monitoring the temperature of the effluent discharged from that exchanger.

The exchangers may be regenerated, in other words, the the pollutants which have solidified on the cold surfaces of the exchangers may be removed, by any method known in the art, preferably making use of some or all of the flow of purified gaseous effluent discharged into the atmoshere.

Alternatively, the regeneration may be effected by withdrawing a predetermined flow of nitrogen from the supply-system of the plant and heating it to a suitable temperature.

As stressed above, during the regeneration, most of the pollutants which are present in the effluent in the gaseous state can be recovered to advantage by making use of the fractional solidification which takes place in the heat exchanger during the removal stage. They may be recovered separately by means of a series of suitably spaced-apart outlets in the exchanger.

Further characteristics and advantages of the invention will become clearer from the following examples which are given purely by way of non-limiting indication, with reference to an installation for implementing the invention, two different embodiments of which are shown schematically in the appended drawings.

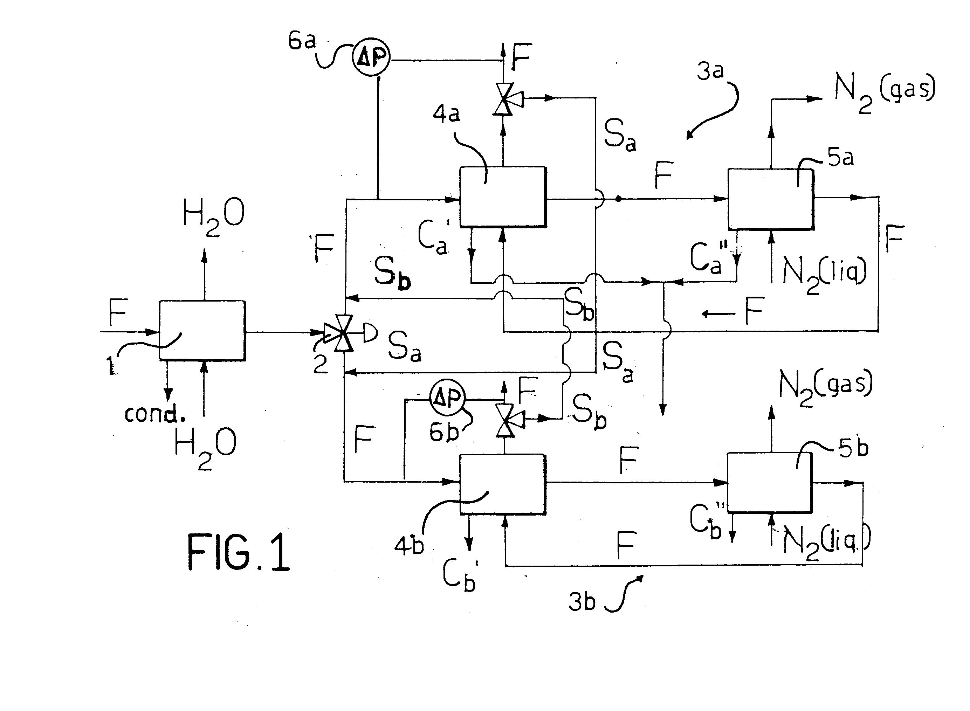

A first embodiment of an installation for carrying out the method of the present invention, shown schematically in Figure 1, includes a dehumidifier 1, for example, a heat exchanger with a tube nest, for removing the moisture present in a gaseous effluent F entering the installation.

Any cold fluid may be used for this purpose, particularly, cooled water. The installation also includes a three-way valve 2 with its inlet connected to the dehumidifier 1 and its outlets connected to two sections 3a and 3b of the installation arranged in parallel for removing the pollutants present in the effluent F.

Each of the sections 3a, 3b includes two heat-exchangers 4a, 5a and 4b, 5b arranged in series.

The sections 3a and 3b are structurally and functionally equivalent and, as stated, are arranged in parallel so that whilst one is at the removal stage, the other is at the regeneration stage.

The heat exchangers 4a, 4b and 5a, 5b are of known type and are constituted respectively by exchangers for recovering frigories from the purified effluent F which is discharged to the atmosphere and cooling the polluted effluent F, and exchangers for solidifying the pollutants.

Meters for measuring the overall loss of pressure through the heat exchangers 4a, 4b and 5a, 5b are indicated 6a and 6b respectively and are intended for piloting the three-way valves 2.

Fluids can flow between the various parts of the installation described above in known manner, for example, through a series of insulated pipes.

In the section which is at the removal stage, for example, the section 3a, the gaseous effluent flows successively through the recovery exchanger 4a, the solidifier 5a and through the recovery exchanger 4a again before being discharged to the atmosphere. In this section, the cold fluids (the effluent purified by the recovery exchanger 4a and the liquid nitrogen in the solidifier 5a) flow through the tube side whilst the fluid to be cooled flows through the shell side.

In the section 3b, which is at the regeneration stage, the exchangers 4b and 5b are heated and the solidified pollutants are recovered therefrom by liquefaction by the withdrawal of a predetermined portion, indicated Sa, of the effluent F purified in the portion 3a.

An equivalent portion withdrawn from the section 3b when it is at the removal stage is indicated Sb in Figure 1.

The flows of the pollutants which have condensed separately in the exchangers 4a, 5a, 4b, and 5b are indicated $c'_a$, $c''_a$, $c'_b$, and $c''_b$, respectively.

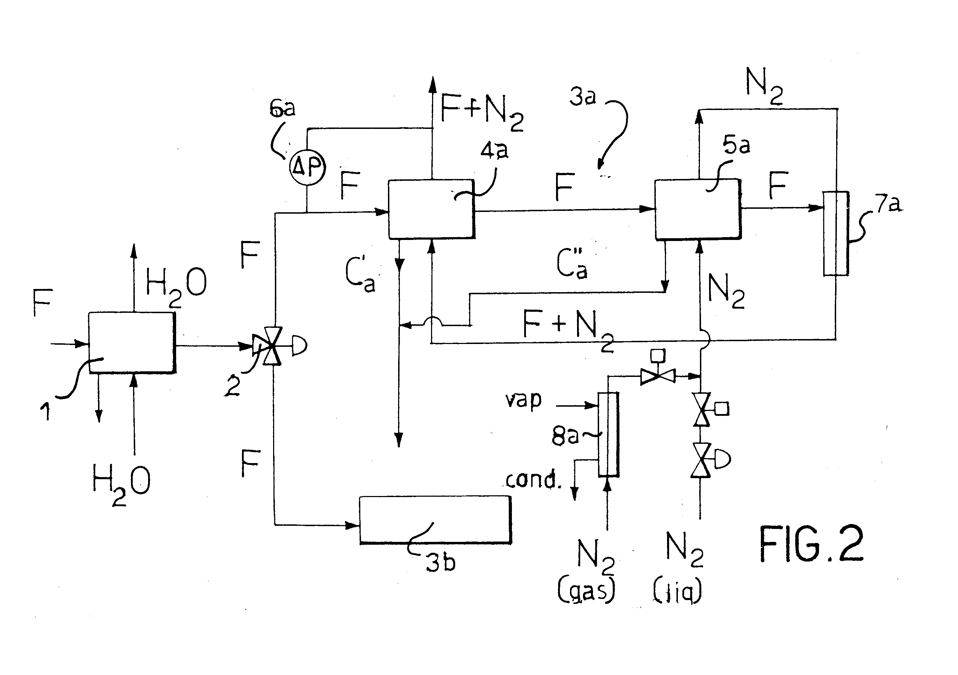

Figure 2 shows, with reference to the portion 3a alone, a variant of the installation of Figure 1 in which, after the nitrogen used for cooling the effluent F has become gaseous and relinquished its frigories, it is mixed with the same effluent in a mixer 7a and then discharged into the atmosphere.

In this latter variant, the section 3a is regenerated with the use of gaseous nitrogen which has been heated beforehand in a two-tube exchanger 8a. In this case, the nitrogen is also discharged into the atmosphere after it has heated the exchangers 4a and 5a.

Some examples of the removal method according to the present invention will now be given with reference to the installations shown schematically in Figures 1 and 2.

EXAMPLE 1

A mass flow of 1181 kg/h of a gaseous effluent F at a temperature of about 30°C and having the following composition:

| air | 1000 kg/h |
| moisture | 27 kg/h |
| methylene chloride | 150 kg/h |
| carbon dioxide | 4 kg/h |

was introduced by known means, not shown, into the installation shown schematically in Figure 1.

The gaseous effluent F was then cooled in the cooler 1 to a temperature of about 7°C by a mass flow of about 1900 kg/h of cooled water.

The water was heated from 2°C to 12°C. 22 kg/h of water were thus separated by condensation in the cooler 1.

The effluent F, which now had a flow-rate of 1159 kg/h, was then admitted through the three-way valve 2 to the section 3a of the installation which was at the removal stage and in which it passed through the heat exchangers 4a and 5a in succession and was cooled successively from +7 to -30°C and from -30 to -100°C, respectively.

The methylene chloride, the carbon dioxide and the moisture present in the gaseous effluent F were thus practically completely separated therefrom.

More particularly, the methylene chloride was solidified in the heat exchanger 5a which was kept at a temperature of about -100°C with the use of a mass flow through the tube side of 280 kg/h of liquid nitrogen which entered the exchanger at a temperature of -173°C and a pressure of 7.7 bars and was discharged therefrom at a temperature of -10°C and a pressure of 7 bars.

The gaseous nitrogen thus obtained was then admitted to the system for supplying nitrogen to the various users of the plant.

1000 kg/h of a purified gaseous effluent F was discharged from the exchanger 5a at a temperature of about -100°C and was then admitted to the tube side of the heat exchanger 4a, in which it was heated to about -10°C and, at the same time, cooled the polluted effluent F entering the shell side of the same exchanger.

Frigories were thus advantageously recovered from the purified effluent and the effluent was then finally discharged to the atmosphere.

After about 12 hours the loss of pressure in the exchangers 4a and 5a reached a value equivalent to a column of about 400 mm of water and the meter 6a switched the gaseous effluent F, by means of the three-way valve 2, to the section 3b which had been regenerated in the meantime.

The regeneration of the portion 3a then enabled 5 kg/h of water, 150 kg/h of methylene chloride and 4 kg/h of carbon dioxide to be recovered from the heat exchangers 4a and 5a.

Similar hourly flow-rates were detected and measured in the section 3b of the installation.

EXAMPLE 2

A mass flow of 1127 kg/h of a gaseous effluent at a temperature of about 30°C and having the following composition:

| air | 1000 kg/h |
|---|---|
| moisture | 27 kg/h |
| methyl alcohol | 100 kg/h |

was introduced into the installation shown in Figure 1 and then cooled in the cooler 1 to a temperature of about 7°C.

A mass flow of about 2000 kg/h of cooled water was used for this purpose and was heated from 2°C to 12°C. 22 kg/h of water were thus separated in the cooler 1.

The effluent F, which now had a flow-rate of 1105 kg/h, was then admitted to the portion 3a of the installation, which was at the removal stage, in which it passed through the heat exchangers 4a and 5a in succession and was cooled successively from + 7 to -30°C and from -30 to -100°C respectively.

The methyl alcohol and the residual moisture present in the gaseous effluent F were thus practically completely separated therefrom.

In particular, the methyl alcohol was solidified in the heat exchanger 5a, which was kept at a temperature of about -100°C with the use of a mass flow through the tube side of 450 kg/h of liquid nitrogen which entered the exchanger at a temperature of -173°C and a pressure of 7.7 bars and was discharged therefrom at a temperature of -10°C and a pressure of 7 bars.

1000 kg/h of a purified gaseous effluent F was discharged from the exchanger 5a at a temperature of about -100°C and was admitted to the tube side of the heat exchanger 4a, in which it cooled the polluted effluent F entering the shell side of the same exchanger and was heated to -10°C.

All of the purified effluent F thus heated was then admitted to the section 3b, which was at the regeneration stage, and then finally discharged into the atmosphere.

After about 360 minutes, the loss of pressure in the exchangers 4a and 5a reached a value equivalent to a 200 mm column of water. The pressure-loss meter 6a then switched the polluted gaseous effluent F by means of the three-way valve 2 to the section 3b which had been regenerated in the meantime.

The subsequent regeneration of the section 3a enabled about 5 kg/h of water and about 100 kg/h of methyl alcohol to be recovered from the heat exchangers 4a and 5a.

Similar hourly flow rates were recovered from the section 3b of the installation.

EXAMPLE 3

A mass flow identical to that described in Example 2 (1127 kg/h) of a gaseous effluent F including:

| air | 1000 kg/h |
|---|---|
| moisture | 27 kg/h |
| ethylene oxide | 150 kg/h |

was cooled in the cooler 1 to a temperature of about 5°C by a mass flow of cooling water identical to that described in Example 2.

23 kg/h of water were thus separated by condensation in the cooler 1.

1104 kg/h of the effluent discharged from the cooler were then admitted to the section 3 of the installation, which was at the removal stage, in which it passed through the heat exchangers 4a and 5a in succession and was cooled successively from + 5 to -30°C and from -30 to -120°C.

The ethylene oxide and the residual moisture still present in the gaseous effluent F were thus separated practically completely therefrom.

In particular, the ethylene oxide was solidified in the heat exchanger 5a, which was kept at a temperature of about -120°C with the use of a mass flow through the tube side of about 250 kg/h of liquid nitrogen at a pressure and a temperature similar to those described in Example 2 above.

1000 kg/h of a purified gaseous effluent F discharged from the exchanger 5a at a temperature of about -120°C was then admitted to the tube side of the heat exchanger 4a and was heated to about -10°C.

After the recovery of frigories therefrom, the purified effluent was admitted to the section 3b, which was at the regeneration stage, and was then discharged to the atmosphere.

The switching between the sections 3a and 3b took place after about 360 minutes as described in Example 2 above, and 4 kg/h of water and 100 kg/h of ethylene oxide were recovered from the accumulators on an hourly basis.

EXAMPLE 4

A gaseous effluent F with a flow rate and a composition identical to those described in Example 1 was purified by the variant shown in Figure 2.

The operations carried out therein were exactly the same as those described in Example 1, with the difference that the volatile pollutants were solidified in the heat exchanger 5a with the use of 260 kg/h of liquid nitrogen at -196°C. The nitrogen discharged from the heat exchanger 5a at a temperature of about -120°C was then mixed with the purified effluent F in the mixer 7a giving rise, with the effluent, to a mass flow of about 1260 kg/h.

The effluent F/nitrogen mixture was then admitted to the heat exchanger 4a in which it cooled the polluted gaseous effluent F from +7 to -30°C and was heated from -100°C to -10°C before being discharged into the atmosphere.

As described in Example 1 above, when an overall loss of pressure equivalent to a column of about 400 mm of water was reached in the section 3a, the pressure-loss meter 6a switched the gaseous effluent F by means of the three-way valve 2 to the section 3b which had been regenerated in the meantime.

As stated above, the regeneration was achieved by heating a predetermined flow, in this case 400 kg/h, of gaseous nitrogen from the supply-system of the plant in the heat exchanger 8a, the heating being achieved by means of condensing steam.

In this case also, the 150 kg/h of methylene chloride was substantially completely removed.

It is clear from the description and the drawings that the method according to the invention achieves the following advantages in comparison with the methods of the prior art:
- the pollutants present in the gaseous effluent are removed substantially completely,
- the method is very reliabile,
- investment and running costs are low,
- the method is highly autonomous and is not dependent on other processes for disposing of any pollutants collected.

Since the pollutants are removed substantially completely, the method of the present invention has the further advantage that instruments for analysing continuously the gaseous effluent discharged into the atmosphere can be eliminated, since the monitoring of the air quality can to advantage be associated with the monitoring of the temperatures of the effluents discharged from the solidifiers 5a and 5b.

Finally, it should be added that the installations illustrated schematically for carrying out the method of the invention may be modified and varied widely by an expert in the art without thereby departing from the scope of protection of the present invention as defined in the following claims.

Thus, for example, in a further variant, the nitrogen discharged from the heat exchanger 5a could be used further for cooling the gaseous effluent F upstream of the exchanger 4a so as to recover further frigories from the liquid nitrogen before it is admitted to the supply system of the plant.

**Claims**

1.  A method of removing pollutants in the form of gases, vapours or aerosols from a gaseous effluent, characterised in that the effluent including the pollutants is cooled to a temperature no higher than the freezing points of the pollutants so that they are separated from the effluent by solidification.

2.  A method according to Claim 1, characterised in that the solidified pollutants are subsequently recovered after liquefaction.

3.  A method according to Claim 1, characterised in that the cooling is carried out by a refrigerant fluid selected from the group comprising liquid nitrogen, freon, brine and ammonia.

4. A method according to Claim 1, characterised in that the cooling temperature is between -50 and -150ºC.

FIG.1

EP 0 477 813 A1

FIG.2

EP 0 477 813 A1

European
Patent Office

EUROPEAN SEARCH
REPORT

Application Number

EP 91 11 6123

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 275 472   (MESSER GRIESHEIM GMBH)<br>* claim; figure 1 *<br>– – – | 1-4 | B 01 D 8/00<br>B 01 D 53/00 |
| X | WO-A-8 806 481   (INGEN-JÖRSFIRMA UTILEX)<br>* claims 1,2; figure *<br>– – – | 1-4 | |
| X | US-A-2 659 452   (A. GAYDASCH)<br>* complete document *<br>– – – – – | 1 | |

TECHNICAL FIELDS
SEARCHED (Int. Cl.5)

B 01 D 8/00
B 01 D 53/00

The present search report has been drawn up for all claims

| Place of search | Date of completion of search | Examiner |
|---|---|---|
| Berlin | 03 December 91 | BERTRAM H E H |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document